# EUROPÄISCHE PATENTANMELDUNG

(11) **EP 0 618 397 A1**
(43) Veröffentlichungstag der Anmeldung: **05.10.1994**
(21) Anmeldenummer: 94105073.4
(22) Anmeldetag: 30.03.1994
(51) Int. Cl.: F16L 55/18, F16L 55/26

(54) **Vorrichtung zum Bearbeiten der Innenoberfläche einer nichtbegehbaren Rohrleitung**

(30) Priorität: 02.04.1993 DE 9305079 U
(71) Anmelder: SIEMENS AKTIENGESELLSCHAFT, D-80333 München (DE)
(72) Erfinder: Dippold, Clemens, Dipl.-Ing., D-96049 Bamberg (DE); Gegner, Konrad, D-90574 Rosstal (DE)

(57) **Zusammenfassung**

Eine Vorrichtung zum Bearbeiten der Innenoberfläche einer nichtbegehbaren Rohrleitung enthält ein in der Rohrleitung fahrbares Fahrzeug, das an einer drehbar um eine Drehachse im Fahrzeug gelagerten Halteeinrichtung (10) eine Bearbeitungsvorrichtung trägt, die auf einen Radialschlitten (106) montiert ist. Der Radialschlitten (106) ist verschiebbar auf einer jeweils mit ihren Enden in der Halteeinrichtung (10) quer zur Drehachse ruhend gelagerten Kolbenstange (104) geführt und ist als Kammer ausgebildet, durch die die Kolbenstange (104) hindurchgeführt ist und die von einem Kolben (108) in zwei mit einem Druckmedium beaufschlagbare Teilkammer (106a, 106b) aufgeteilt wird. Durch diese Maßnahme wird eine sichere Führung und Halterung der Bearbeitungsvorrichtung gewährleistet, so daß auf die Bearbeitungsvorrichtung einwirkende Längskräfte und Biegemomente sicher aufgenommen und auf das Fahrzeug weitergeleitet werden.

## Beschreibung

Die Erfindung bezieht sich auf eine Vorrichtung zum Bearbeiten der Innenoberfläche einer nichtbegehbaren Rohrleitung, wie sie beispielsweise aus der europäischen Patentschrift 0 204 694 bekannt ist.

Zum Sanieren von schadhaft gewordenen, nichtbegehbaren Rohrleitungen sind vor dem eigentlichen Verspachteln und Ausbessern der schadhaften Stellen eine Reihe von vorbereitenden mechanischen Bearbeitungsschritten, insbesondere Bohr- und Fräsarbeiten, erforderlich. Aus der europäischen Patentschrift 0 204 694 ist eine Vorrichtung zum Bearbeiten der Innenoberfläche einer nichtbegehbaren Rohrleitung bekannt, bei der die hierzu notwendigen Bearbeitungsvorrichtungen, beispielsweise ein Fräskopf mit einem Schaftfräser als Werkzeug, auf einem in die Rohrleitung einführbaren ferngesteuerten Fahrzeug angeordnet sind. Um den gesamten Innenumfang der Rohrleitung bearbeiten zu können, sind diese Bearbeitungsvorrichtungen um die Achse der Rohrleitung und somit auch um die Längsachse des relativ zur Rohrleitungsachse ruhenden Fahrzeuges drehbar gelagert.

Die Bearbeitungsvorrichtung ist in einem Drehbügel gelagert, der an einem an der Stirnseite des Fahrzeugs drehbar angeordneten Lager mit L-förmigem Querschnitt angebracht ist. Sie umfaßt einen Vorschubzylinder mit einem Zylinderkolbenaggregat, mit dem der Vorschubzylinder an Führungsstangen radial zum Rohr verstellt werden kann.

Sowohl der Zylinderkolben als auch die Führungsstangen sind nur an ihren außerhalb des Vorschubzylinders befindlichen Ende auf der Basis des L-förmigen Drehbügels gelagert, so daß beim Bearbeiten unvermeidbar auftretende Biegemomente nur unzureichend aufgenommen werden können.

Der Erfindung liegt nun die Aufgabe zugrunde, eine Vorrichtung zum Bearbeiten der Innenoberfläche einer nichtbegehbaren Rohrleitung anzugeben, bei der eine mechanisch stabile und sichere Lagerung der Bearbeitungsvorrichtung auch bei hoher Beanspruchung gewährleistet ist.

Die genannte Aufgabe wird gemäß der Erfindung gelöst mit den Merkmalen des Schutzanspruches 1. Da die Bearbeitungsvorrichtung auf einem Radialschlitten montiert ist, der als Kammer ausgebildet und verschiebbar auf einer Kolbenstange gelagert ist, die ihn umschließt und deren Enden jeweils starr in einer am Fahrzeug drehbar gelagerten Halterung fixiert sind, wird eine sichere Führung und Halterung der Bearbeitungsvorrichtung gewährleistet. Auf die Bearbeitungsvorrichtung einwirkenden Längskräfte und Biegemomente werden sicher aufgenommen und auf das Fahrzeug weitergeleitet.

Weitere vorteilhafte Ausgestaltungen der Erfindung ergeben sich gemäß der Unteransprüche.

Zur weiteren Erläuterung der Erfindung wird auf die Zeichnung verwiesen, in deren
Figur 1 eine gattungsgemäße Vorrichtung in einer Seitenansicht schematisch veranschaulicht ist.
Figur 2 zeigt in einem Schnitt schematisch die wesentlichen konstruktiven Elemente eines Fahrzeugs gemäß der Erfindung und in
Figuren 3 und 4 ist eine am Fahrzeug drehbar angeordnete Halteeinrichtung für eine Bearbeitungsvorrichtung in einem Schnitt bzw. einer Draufsicht veranschaulicht.

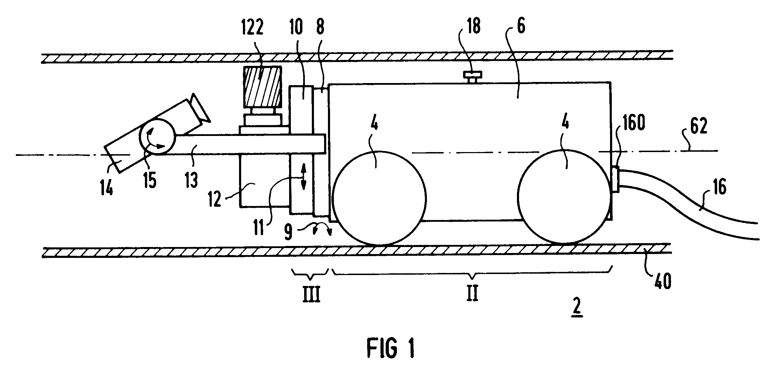

Gemäß **Figur 1** enthält eine Vorrichtung 2 zum Bearbeiten der Innenoberfläche einer nichtbegehbaren Rohrleitung 40 ein auf Rädern 4 fahrbares Fahrzeug 6, das an einer seiner Stirnseiten mit einem Drehteller 8 versehen ist, der um eine zur Längsachse des Fahrzeugs 6 parallele Drehachse 62 drehbar gelagert ist. Diese Drehbarkeit wird in der Figur durch den gebogenen Doppelpfeil 9 veranschaulicht.

Am Drehteller 8 ist eine Halteeinrichtung 10 für eine Bearbeitungsvorrichtung 12, beispielsweise einen Fräskopf befestigt, die an einem in der Halteeinrichtung 10 in Richtung des Doppelpfeils 11 verschiebbaren und in der Figur nicht sichtbaren Radialschlitten angeordnet ist.

Am Drehteller 8 ist außerdem an einem Ausleger 13 eine Fernsehkamera 14 mit Beleuchtung angeordnet, die um eine quer zur Drehachse 62 orientierte Achse in Richtung der Doppelpfeile 15 geschwenkt werden kann.

Die der Bearbeitungsvorrichtung 12 gegenüberliegende Stirnseite des Fahrzeugs 6 ist mit einem Anschluß 160 für Versorgungsleitungen 16 versehen, mit der die zum Betrieb der gesamten Vorrichtung 2 erforderlichen Betriebsmedien, beispielsweise Hydrauliköle oder Druckluft, sowie elektrischen Kabel herangeführt werden.

Auf der den Rädern 4 gegenüberliegenden Seite des Fahrzeugs 6 ist außerdem ein radial verstellbarer Spannkolben 18 angeordnet, mit dem das Fahrzeug 6 in der Bearbeitungsposition innerhalb der Rohrleitung 40 fixiert werden kann.

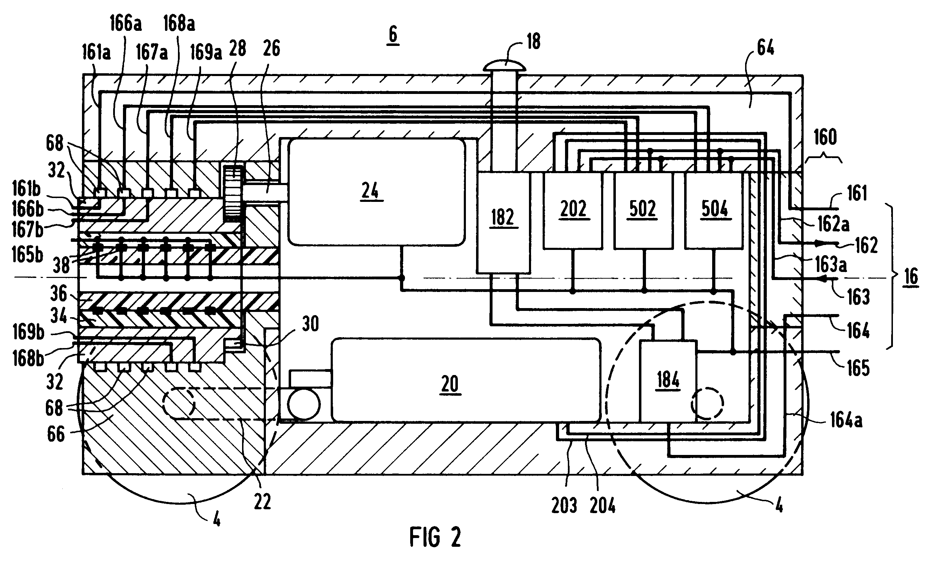

In der Prinzipdarstellung gemäß **Figur 2** ist das Fahrzeug 6 schematisch in einem Schnitt gemeinsam mit den innerhalb des Fahrzeugs angeordneten und zu seinem Betrieb sowie den zum Betrieb der Bearbeitungsvorrichtung erforderlichen Komponenten veranschaulicht. Innerhalb einer vollständig gekapselten Gehäuseschale 64 ist ein Hydraulikmotor 20 angeordnet, dessen Welle über Zahnräder eine zu den gestrichelt dargestellten vorderen Rädern 4 führende Kette 22 antreibt.

Durch die Verwendung einer Kette 22 kann mit geringem Aufwand und ohne Eingriffe in die am Hydraulikmotor 20 eingreifende Antriebsmechanik eine Veränderung der Achsposition der Antriebsräder 4 vorgenommen werden, so daß das Fahrzeug einfach an unterschiedliche Einsatzbedingungen, beispielsweise unterschiedliche Rohrquerschnitte der Rohrleitung, angepaßt werden kann.

Innerhalb der Gehäuseschale 64 ist außerdem ein Elektromotor 24 angeordnet, der über ein an seiner Antriebswelle 26 angeordnetes Ritzel 28 in den Zahnkranz 30 einer zur Längsrichtung parallelen Hohlwelle 32 eingreift.

Zum Fixieren des Fahrzeuges 6 in der Rohrleitung mit dem Spannkolben 18 ist ein pneumatischer Spannzylinder 182 vorgesehen, der über ein 3/2-Wegeventil an eine Leitung 164, 164a für Druckluft angeschlossen ist.

Als Antriebseinrichtungen für die Radialzustellung des in der Figur nicht sichtbaren Fräskopfes sowie den innerhalb des Fräskopfes angeordneten Fräsmotor zum Antrieb des Fräswerkzeuges sind ebenfalls hydraulische Antriebsaggregate vorgesehen. Diese werden ebenso wie der Hydraulikmotor 20 über elektrisch steuerbare hydraulische Proportionalventile 504, 502 bzw. 202 mit Hydrauliköl versorgt. Das Fahrzeug 6 ist hierzu an seiner vom Bearbeitungskopf abgewandten Stirnseite an eine zu einem Vorratstank führende Hydraulikleitung 162 sowie an eine zu einer Ölpumpe führende Hydraulikleitung 163 angeschlossen. Diese Hydraulikleitungen werden in Form von innerhalb der Gehäuseschale 64 als Bohrungen verlaufenden Kanälen 162a, 163a jeweils zu den Proportionalventilen 202, 502 und 504 geführt. Vom Proportionalventil 202 ausgehend führen ebenfalls innerhalb der Gehäuseschale 64 verlaufende Kanäle 203, 204 unmittelbar zum Hydraulikmotor 20 für den Fahrantrieb. Von den Proportionalventilen 502 und 504 führen Kanäle 168a, 169a bzw. 166a, 167a zu Nuten 68 einer die Hohlwelle 32 umgebenden Lagerschale 66. Diese Nuten 68 umgeben ringförmig die Hohlwelle 32, die in ihrem Wellenschaft Kanäle 166b bis 169b enthält, die im Bereich dieser Nuten 68 an die Außenmantelfläche der Welle 32 herangeführt sind. Anstelle der gemäß Figur 2 in der Lagerschale 66 angeordnete Nuten 68 können Nuten auch am Außenumfang der Hohlwelle 32 angeordnet sein.

Zur elektrischen Versorgung des Elektromotors 24 und der Ventile 184, 202, 502 und 504 sowie der in der Nähe der Bearbeitungsvorrichtung untergebrachten elektrischen Hilfseinrichtungen, wie beispielsweise Videokamera, Beleuchtung und Schwenkantrieb für die Videokamera, ist das Fahrzeug 6 an ein mehrpoliges elektrisches Kabel 165 angeschlossen, das zur besseren Übersichtlichkeit der Darstellung nur symbolisch als einpolige Leitung veranschaulicht ist. Innerhalb des Fahrzeugs 6 führen elektrische Leitungen 165a in das Innere der Hohlwelle 32 und von dort zu einem mehrpoligen Schleifringübertrager, von dem ebenfalls aus Gründen der Übersichtlichkeit nur sechs Pole dargestellt sind. Dieser Schleifringübertrager enthält entsprechend der Anzahl der erforderlichen Anschlüsse mehrere an einer drehfixiert mit Hohlwelle 32 verbundenen Hohlwelle 34 angeordnete Schleifringe 38, die jeweils mit Kontakten elektrisch verbunden sind, die an der Außenoberfläche einer drehfest mit der Gehäuseschale 64 verbundenen Hülse 36 angeordnet sind.

In der Gehäuseschale 64 ist außerdem ein Kanal 161a für Wasser vorgesehen, der ebenfalls über eine am Außenumfang der Hohlwelle 32 befindliche Drehdurchführung an eine innerhalb des Schaftes der Hohlwelle 32 führende Leitung 161b angeschlossen ist.

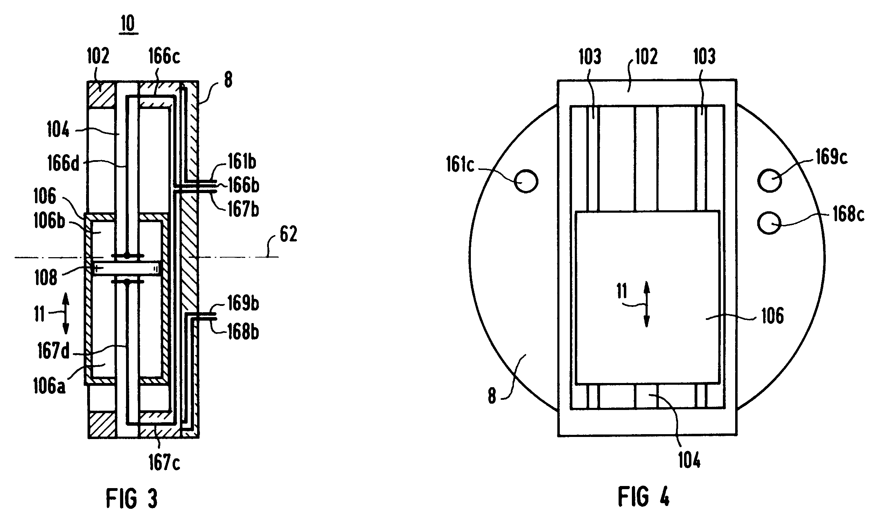

Gemäß **Figur 3** enthält die Halteeinrichtung 10 einen auf dem Drehteller 8 befestigten Halterahmen 102, in dem eine Kolbenstange 104 quer zur Drehachse 62 des Drehtellers 8 fixiert ist. Längs der Kolbenstange 104 ist in Richtung des Doppelpfeiles 11 ein Radialschlitten 106 verschiebbar angeordnet. Die Kolbenstange 104 ist hierzu mit einem feststehenden Kolben 108 versehen, der vom Radialschlitten 106 in Form eines freischwimmenden oder freibeweglichen Zylinders umgeben wird. Dieser Kolben 108 teilt die vom Radialschlitten 106 gebildete und die Kolbenstange 104 umschließende Kammer in zwei Teilkammern 106a und 106b, die wechselseitig mit Druck beaufschlagt werden können und somit eine Längsbewegung des Radialschlittens 106 bewirken.

Die Zuführung der Hydraulikflüssigkeit für die Teilkammern 106a und 106b erfolgt durch innerhalb der Kolbenstange 104 verlaufende Kanäle 166d und 167d, die unmittelbar an innerhalb des Halterahmens 102 verlaufende Kanäle 166c bzw. 167c angeschlossen sind, die wiederum unmittelbar mit innerhalb des Drehtellers 8 verlaufenden Kanälen 166b bzw. 167b verbunden sind. Dadurch wird eine freie und störungsanfällige Leitungsführung vermieden.

Gemäß **Figur 4** hat der Halterahmen 102 eine rechteckige Gestalt und ist mit Führungsstangen 103 versehen, die als zusätzliche Führung für den Radialschlitten 106 dienen.

Am Drehteller 8 sind Anschlüsse 161c für Wasser sowie 168c und 169c für die zum Fräsmotor führenden Hydraulikleitungen angeordnet. Aus Gründen der Übersichtlichkeit sind die elektrischen Anschlüsse für die zur Fernsehkamera und die hierzu erforderlichen Beleuchtungs- und Antriebseinrichtungen führenden elektrischen Leitungen nicht dargestellt.

## Patentansprüche

1. Vorrichtung zum Bearbeiten der Innenoberfläche einer nichtbegehbaren Rohrleitung (40), bei der ein in der Rohrleitung (40) fahrbares Fahrzeug (6) an einer drehbar um eine Drehachse (62) am Fahrzeug gelagerten Halteeinrichtung (10) eine Bearbeitungsvorrichtung (12) trägt, die auf einem Radialschlitten (106) montiert ist, der verschiebbar auf einer jeweils mit ihren Enden in der Halteeinrichtung (10) quer zur Drehachse (62) ruhend gelagerten Kolbenstange (104) geführt und als Kammer ausgebildet ist, durch die die Kolbenstange (104) hindurchgeführt ist und die von einem Kolben (108) in zwei mit einem Druckmedium beaufschlagbare Teilkammern (106a, 106b) aufgeteilt wird.

2. Vorrichtung nach Anspruch 1, **dadurch gekennzeichnet,** daß die Halteeinrichtung (10) zusätzliche Mittel (103) zur Führung des Radialschlittens (106) umfaßt.

3. Vorrichtung nach Anspruch 1 oder Anspruch 2, **dadurch gekennzeichnet,** daß zum Heranführen des Druckmediums in die Teilkammern (106a, 106b) innerhalb der Kolbenstange (104) verlaufende Kanäle (166 d, 167d) vorgesehen sind.

4. Vorrichtung nach Anspruch 3 in Verbindung mit Anspruch 2, **dadurch gekennzeichnet,** daß zum Heranführen des Druckmediums an die Kolbenstange (104) innerhalb der Halteeinrichtung (10) Kanäle (166c, 167c) vorgesehen sind, die sich unmittelbar an die innerhalb der Kolbenstange (104) verlaufenden Kanäle (166d, 167d) anschließen.
